(19) Europäisches Patentamt European Patent Office Office européen des brevets

(11) **EP 2 269 954 B1**

(12) **FASCICULE DE BREVET EUROPEEN**

(45) Date de publication et mention de la délivrance du brevet:
**14.08.2013 Bulletin 2013/33**

(51) Int Cl.:
*C01D 15/02* *(2006.01)*   *H01M 10/052* *(2010.01)*
*H01M 4/525* *(2010.01)*   *C01B 25/30* *(2006.01)*
*C01B 25/37* *(2006.01)*

(21) Numéro de dépôt: **10166883.8**

(22) Date de dépôt: **22.06.2010**

(54) **Materiau d'electrode positive pour accumulateur lithium-ion**

Positives Elektrodenmaterial für sekundäre Lithiumzellen

Positive electrode material for lithium secondary cell

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **23.06.2009 FR 0903045**

(43) Date de publication de la demande:
**05.01.2011 Bulletin 2011/01**

(73) Titulaire: **SAFT**
**93170 Bagnolet (FR)**

(72) Inventeurs:
• **Tessier, Cécile**
**33520 Bruges (FR)**
• **Breger, Julien**
**33000 Bordeaux (FR)**
• **Jan, Olivier**
**33500 Libourne (FR)**
• **Biensan, Philippe**
**33360 Carigan de Bordeaux (FR)**
• **Deveney, Bridget**
**Baltimore, MD 21218 (US)**
• **Nechev, Kamen**
**Cockeysville MD 21030 (US)**

(74) Mandataire: **Hirsch & Associés**
**58, avenue Marceau**
**75008 Paris (FR)**

(56) Documents cités:
**WO-A1-2007/087714   US-A1- 2006 216 605**
**US-A1- 2007 057 228**

**Description**

DOMAINE TECHNIQUE

Le domaine technique de l'invention est celui des matières électrochimiquement actives destinées à être utilisées dans l'électrode positive (ou cathode) d'un générateur électrochimique rechargeable (ou accumulateur) au lithium.

ART ANTERIEUR

Les oxydes lithiés de métaux de transition sont connus comme matière active cathodique utilisable dans les générateurs électrochimiques rechargeables au lithium. Dans l'électrode positive, on utilise le plus souvent comme matière active des oxydes lithiés de métaux de transition de formule générale $LiMO_2$, où M représente au moins un métal de transition, tel que Mn, Ni, Co, Al ou un mélange de ceux-ci. Ces matières actives permettent d'obtenir des performances élevées, notamment en termes de capacité réversible en cyclage et de durée de vie.

Les oxydes lithiés de métaux de transition de formule $LiMO_2$, où M représente les éléments nickel, cobalt et aluminium présentent une bonne durée de vie en cyclage mais présentent l'inconvénient d'être d'une part coûteux et d'autre part instables à haute température. L'instabilité à haute température de ce type de matériaux peut constituer un risque pour l'utilisateur du générateur électrochimique lorsque celui-ci fonctionne hors de ses conditions nominales.

C'est pourquoi, d'autres types de matières actives d'un coût moindre et présentant une meilleure stabilité thermique ont été étudiés parmi lesquels les phosphates lithiés d'au moins un métal de transition, notamment les composés basés sur $LiFePO_4$. Cependant l'utilisation de ces composés se heurte à leur faible capacité, leur faible conductivité électronique, et au fait que $LiFePO_4$ et $FePO_4$ sont de mauvais conducteurs ioniques. Il est donc nécessaire d'ajouter dans l'électrode une forte proportion d'un matériau conducteur, ce qui pénalise ses performances, notamment ses caractéristiques en cyclage.

Il est connu du document EP-A-1 548 861 de préparer une matière active constituée d'un mélange d'un oxyde de lithium et d'au moins un métal de transition avec un phosphate de lithium et d'au moins un métal de transition. Ce document décrit une proportion de phosphate de lithium et d'au moins un métal de transition comprise entre 1 et 50% du poids du mélange.

Le document US 2007/0057228 propose une composition de matière active présentant à la fois une capacité électrochimique élevée, une tension élevée et une sécurité d'utilisation accrue. Cette composition comprend un mélange contenant:

- un oxyde lithié d'au moins un métal de transition choisi parmi Co, Ni, Al, Mg, Mn, Cr et Ti ; et
- un phosphate lithié d'au moins un métal de transition.

La proportion massique de l'oxyde lithié d'au moins un métal de transition peut aller de 5-99 % en poids de la composition. La proportion massique du phosphate lithié d'au moins un métal de transition peut aller de 95-1 % en poids de la composition.

Le document US 2006/0216605 propose une composition de matière active comprenant un mélange:

- d'un oxyde lithié contenant au moins Ni ou Mn, et contenant de préférence Co ; avec
- un phosphate lithié d'au moins un métal de transition.

La proportion massique du phosphate lithié d'au moins un métal de transition peut aller de 20-99 % en poids de la composition. Il est dit dans ce document qu'un accumulateur comprenant cette matière active dans l'électrode positive conserve une résistance interne faible lorsqu'il est stocké à haute température.

On recherche un accumulateur présentant une résistance interne plus faible que les accumulateurs décrits dans le document US 2006/0216605 et présentant également une bonne stabilité thermique et un bon comportement en cyclage.

RESUME DE L'INVENTION

L'invention a pour objet une composition comprenant :

a) un oxyde lithié de métaux de transition contenant au moins nickel, cobalt et aluminium ;
b) un phosphate lithié d'au moins un métal de transition, dont la surface est recouverte au moins partiellement d'une couche de carbone,

- la proportion massique de l'oxyde lithié de métaux de transition contenant au moins nickel, cobalt et aluminium, étant de 1 à 10% du poids de la composition ;
- la proportion massique du phosphate lithié d'au moins un métal de transition étant de 90 à 99% du poids de la composition.

Selon un mode de réalisation, le phosphate lithié d'au moins un métal de transition a pour formule $Li_aM_bP_cO_{4-t}$ où

M est choisi parmi Fe, Mn, Co et Ni, de préférence Fe;

a, b et c vont de 0,9 à 1,1 ;

t est inférieur ou égal à 0,4.

Selon un mode de réalisation, le phosphate lithié d'au moins un métal de transition a pour formule $LiFePO_4$.

Selon un mode de réalisation,l'oxyde lithié de métaux de transition contenant au moins nickel, cobalt et aluminium a pour formule $Li_w(Ni_xCo_yAl_z)O_2$, où

w va de 0,9 à 1,1 ;

$x > 0$ ;

$y > 0$ ;

$z > 0$.

Selon un mode de réalisation,

$0,70 \leq x \leq 0,9$ ;

$0,05 \leq y \leq 0,25$ ;

$z \leq 0,10$ et

$x+y+z=1$.

Selon un mode de réalisation,

$0,75 \leq x \leq 0,85$ ;

$0,10 \leq y \leq 0,20$.

Selon un mode de réalisation, x=0,80 ; y= 0,15 et z=0,05.

Selon un mode de réalisation, la proportion massique du phosphate lithié d'au moins un métal de transition est de 95 à 99 % du poids de la composition, et la proportion massique de l'oxyde lithié de métaux de transition contenant au moins nickel, cobalt et aluminium est de 1 à 5% du poids de la composition.

L'invention a également pour objet une électrode comprenant la composition selon l'invention.

Selon un mode de réalisation, l'électrode présente un grammage supérieur à 8 mg/cm²/f, de préférence au moins 10 mg/cm²/f et de préférence encore au moins 20 mg/cm²/f .

Selon un mode de réalisation, l'électrode présente une valeur d'impédance normalisée ASI, mesurée pour un courant de décharge de 30C pendant 15s, de moins de 55 000 Ohm.cm², de préférence de moins de 45 000 Ohm.cm², ou une valeur d'impédance normalisée ASI, mesurée pour un courant de décharge de 20C pendant 5s, de moins de 65 000 Ohm.cm², de préférence de moins de 55 000 Ohm.cm², pour un état de charge d'environ 50%.

L'invention a également pour objet un accumulateur comprenant :

- un électrolyte non aqueux,
- au moins une électrode négative, et
- au moins une électrode positive telle que décrite précédemment.

Selon un mode de réalisation, l'accumulateur est de type lithium-ion ou lithium-polymère.

Enfin, l'invention a également pour objet un procédé de charge d'un accumulateur selon l'invention, au cours duquel la charge est effectuée à un courant de charge d'au moins 2C, et dans lequel la capacité chargée représente au moins 150% de la capacité nominale pour une tension de coupure de 3,6V ou au moins 140% de la capacité nominale pour une tension de coupure de 4,1V.

Selon un mode de réalisation, la capacité chargée représente au moins 155% de la capacité nominale pour une tension de coupure de 3,6V ou au moins 145% de la capacité nominale pour une tension de coupure de 4,1V.

BREVE DESCRIPTION DES FIGURES

Dans les figures, le matériau $Li(Ni_{0,8}Co_{0,15}Al_{0,05})O_2$ est symbolisé par l'abréviation NCA et $LiFePO_4$ est symbolisé par l'abréviation LFP.

Figure 1: Courbes de calorimétrie différentielle (DSC) du matériau $LiFePO_4$ enrobé de carbone du contre-exemple 2 et de $Li(Ni_{0,8}Co_{0,15}Al_{0,05})O_2$ du contre-exemple 3.

Figure 2: Cycle de contrôle initial pour l'exemple selon l'invention et les contre-exemples 1, 2 et 3 : charge à C/5 jusqu'à 3,65V (contre-exemple 2) ou 4,0V (exemple selon l'invention et contre-exemples 1 et 3) puis décharge à C/5 avec un pic de courant de décharge (pulse) de 5C pendant 10s à 50% de profondeur de décharge pour l'exemple selon l'invention et les contre-exemples 1, 2 et 3. Le contre-exemple 2 délivre toute sa capacité à 3,65 V. Une charge à 4 V n'apporte pas plus de capacité. 3,65 V correspond à 100% de charge pour le contre-exemple 2.

Figure 3: Evolution de la capacité lors d'un cyclage au régime de C/2 à 45°C pour l'exemple selon l'invention et les contre-exemples 1 et 2. La capacité est mesurée lors de cycles de contrôle effectués au courant de C/5 et 25°C.

Figure 4: Evolution de la résistance interne lors d'un cyclage au régime de décharge de C/2 à 45°C pour l'exemple selon l'invention et les contre-exemples 1 et 2. La résistance interne est mesurée en effectuant un pic de courant de décharge (pulse) au courant de 5C pendant 10 s à 50% de profondeur de décharge lors de cycles de contrôle, dans lesquels l'accumulateur est déchargé au régime de C/5 à 25°C.

Figure 5: Valeurs de résistance interne normalisées (en ohm.cm$^2$) à différents états de décharge (Depth of Discharge, ou %DOD) obtenues en décharge à 30°C à l'aide de pulses de courant de 10s pour :

- un oxyde lithié contenant nickel, cobalt et aluminium (NCA),
- un oxyde lithié contenant nickel, cobalt, manganèse et aluminium (NMCA), et
- un oxyde lithié contenant nickel, cobalt et manganèse (NMC).

Figure 6: Courbes de charge/décharge (1$^{er}$ cycle) effectuées à température ambiante et à C/20 en piles bouton vs. Li métal, pour $LiFePO_4$ enrobé ou non de carbone.

Figure 7 : Tests de surcharge des accumulateurs A, B et C

Figure 8 : Courbes de charge et de décharge des accumulateurs des contre-exemples 4, 5, 6 et de l'accumulateur selon l'invention. La décharge est effectuée à une température de 60°C à un courant de décharge de C/20 , C étant la capacité en décharge mesurée de l'accumulateur lorsque celui-ci est déchargé en une heure.

Figure 9 : Impédance de l'électrode en fonction de son état de charge pour :

- une électrode selon l'invention comprenant 90% en poids de LFP enrobé de carbone et 10% en poids de $Li(Ni_{0,8}Co_{0,15}Al_{0,05})O_2$ ;
- une électrode comprenant seulement LFP.

Le test de décharge est effectué à un courant de 30C pendant 15 s.

EXPOSE DETAILLE DES MODES DE REALISATION

L'invention concerne une matière électrochimiquement active comprenant une composition constituée d'un mélange :

- d'un phosphate lithié d'au moins un métal de transition, que l'on désignera dans ce qui suit par l'abréviation LMP, avec
- un oxyde lithié de métaux de transition contenant au moins nickel, cobalt et aluminium, que l'on désignera dans ce qui suit par l'abréviation NCA.

La proportion massique de NCA comprise entre 1 et 10%, et de préférence comprise entre 1 et 5% du poids de la composition. Au-delà de 10% de NCA, la résistance interne de la matière active ne diminue pas de façon significative.

La proportion massique de LMP comprise entre 90 et 99%, de préférence comprise entre 95 et 99% du poids de la composition.

Selon un mode de réalisation, le phosphate lithié d'au moins un métal de transition a pour formule : $Li_aM_bP_cO_{4-t}$ où a, b, c et t satisfont les relations suivantes: $0,9 \leq a, b, c \leq 1,1$ ; $0 \leq t \leq 0,4$. Le métal de transition peut être choisi parmi Fe, Ni, Co, Mn, préférablement Fe. On utilise de préférence du $LiFePO_4$.

Selon un mode de réalisation, l'oxyde lithié de métaux de transition contenant au moins nickel, cobalt et aluminium a pour formule $Li_w(Ni_xCo_yAl_z)O_2$, où w va de 0, 9 à 1,1 et x, y et z sont tous strictement positifs. Selon un mode de réalisation préféré, $0,70 \leq x \leq 0,9$ ; $0,05 \leq y \leq 0,25$ ; $z \leq 0,10$ et $x+y+z=1$.

Selon un mode de réalisation particulièrement préféré $0,75 \leq x \leq 0,85$ et $0,10 \leq y \leq 0,20$.

Selon un mode de réalisation particulièrement préféré, le NCA a pour formule $Li(Ni_{0,8}Co_{0,15}Al_{0,05})O_2$.

Selon l'invention, la surface du matériau LMP est recouverte au moins partiellement, de préférence totalement, d'une couche de carbone. Le LMP peut être réduit sous forme de poudre par broyage mécanique. Les particules obtenues sont ensuite recouvertes d'une couche de carbone. On pourra se référer à la demande de brevet US 2002/0195591 qui divulgue un procédé d'enrobage de grains d'une matière active par du carbone.

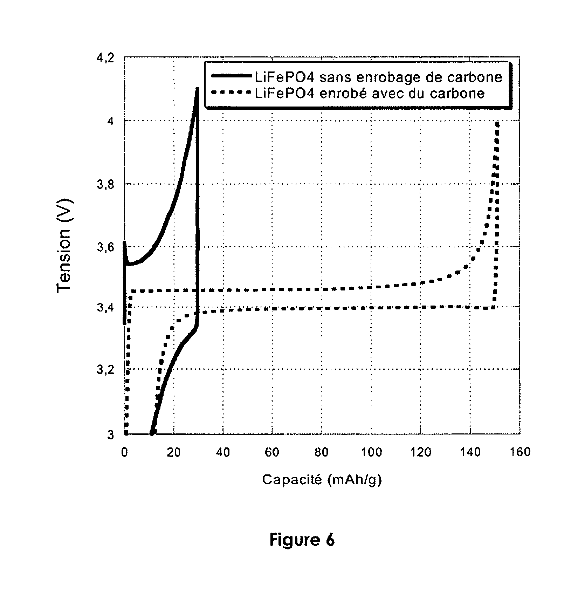

Il a été constaté que l'enrobage des particules de LMP par du carbone avait pour effet de réduire sa résistance électrique et d'augmenter sa capacité électrochimique. La Figure 6 illustre l'effet du revêtement de carbone sur la capacité électrochimique du LMP.

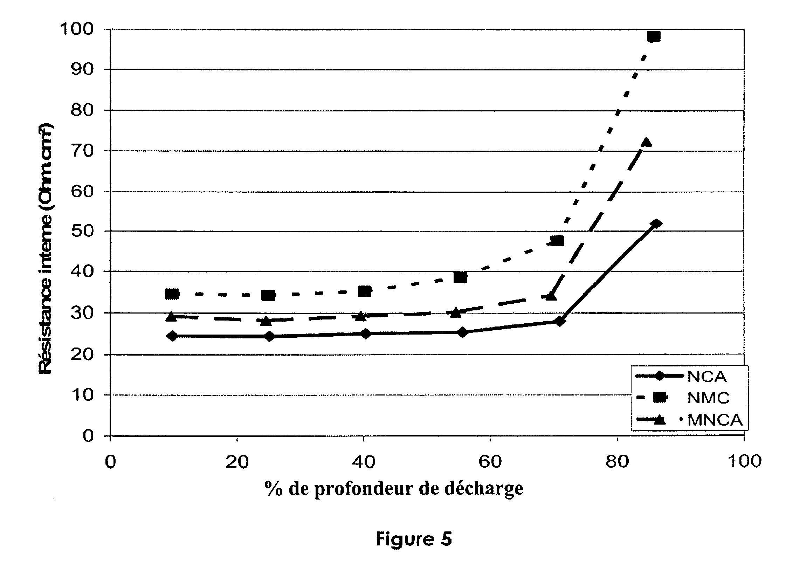

Il a été également constaté de façon surprenante que l'ajout d'aluminium dans un oxyde lithié de métaux de transition avait pour effet d'augmenter sa conductivité électronique, autrement dit de réduire sa résistance interne. La figure 5 illustre cet effet. En effet, elle représente les valeurs de résistance interne d'accumulateurs complets comportant une anode en graphite, calculées à partir d'une décharge à C/5 jusqu'à 2,5V avec des pics de décharge de courant de 20C pendant 10s à différents états de décharge, pour trois différents matériaux d'électrode positive :

- NCA (Ni, Co, Al),
- NMCA : un oxyde lithié contenant Ni, Mn, Co, Al et
- NMC : un oxyde lithié contenant Ni, Mn et Co.

Les résultats montrent que les valeurs de résistance interne les plus faibles sont obtenues lorsque l'aluminium est présent dans l'oxyde lithié, et plus particulièrement avec le NCA.

Il a également été constaté de façon surprenante que la présence d'aluminium dans le NCA, associée à un enrobage par du carbone des particules de LMP, permettait de diminuer de façon très significative la résistance interne de la matière active. La présence d'aluminium associée à l'enrobage par du carbone des particules de LMP crée un effet de synergie qui réduit de façon très significative la résistance interne de la matière active.

En plus d'une bonne conductivité électronique, la matière active selon l'invention présente une bonne stabilité thermique, ceci s'explique par la présence d'aluminium dans l'oxyde lithié NCA. La stabilité thermique peut être évaluée à l'aide de la technique de la calorimétrie différentielle (DSC) qui fournit une estimation de la température à laquelle la matière active devient instable en présence d'électrolyte et se décompose en émettant de l'énergie sous forme de chaleur. Plus la température du pic mesurée par DSC est élevée, plus le matériau est stable thermiquement. L'oxyde lithié de métaux de transition utilisé dans la matière active selon l'invention comprend de l'aluminium. La présence d'aluminium permet de déplacer la température de pic vers des valeurs supérieures comme le montre le Tableau 2. Le matériau selon l'invention présente donc un risque réduit d'emballement thermique en comparaison avec un oxyde lithié de métaux de transition, dans lequel les métaux de transition ne sont constitués que de Ni et Co, tel que l'exemple 16 du document US 2006/0216605.

La matière active selon l'invention peut être avantageusement utilisée dans l'électrode positive d'un accumulateur de type lithium. Celui-ci présente alors une bonne durée de vie en cyclage : sa résistance interne varie peu au cours du cyclage et la perte de capacité électrochimique est plus faible.

Il a été découvert qu'il est possible de préparer une électrode présentant un grammage élevé, c'est-à-dire une masse élevée de matière électrochimiquement active par unité de surface d'électrode, sans augmenter la résistance interne de l'électrode. Comme la résistance interne de l'électrode est faible, l'accumulateur présente de bonnes performances en terme de puissance. L'électrode peut donc être utilisée pour des applications électriques nécessitant un fort courant de décharge.

Il est possible de préparer une électrode présentant un grammage supérieur à 8 mg/cm$^2$/face, de préférence au moins 10 mg/cm$^2$/face et de préférence encore au moins 20mg/cm$^2$/face. Malgré un grammage élevé, l'impédance (ou résistance) de l'électrode reste faible. L'impédance de l'électrode peu être obtenue en calculant le rapport entre la variation de la tension ($\Delta V$) et la variation de courant ($\Delta I$) à un temps donné au cours d'un pic de décharge, pour un état de charge donné. Par exemple, l'électrode peut subir une décharge à un courant de 20C pendant 5 secondes pour un état de charge de 50% ; C étant la capacité en décharge mesurée lorsque l'accumulateur est déchargé en une heure (capacité nominale). L'électrode peut aussi par exemple subir une décharge à un courant de 30C pendant 15 secondes pour un état de charge de 50%. La résistance interne de l'électrode est R=$\Delta V/\Delta I$. L'impédance normalisée (Ohm.cm$^2$) est obtenue en multipliant la résistance interne par la surface de l'électrode.

Selon un mode de réalisation, pour un état de charge d'environ 50%, la valeur ASI de l'impédance normalisée, mesurée pour un courant de décharge de 30C pendant 15s, est de moins de 55 000 Ohm.cm$^2$, de préférence de moins de 45 000 Ohm.cm$^2$. Lorsque le test de décharge est réalisé à un courant de décharge de 20C pendant 5s, la valeur ASI de l'impédance normalisée est de moins de 65 000 Ohm.cm$^2$, de préférence de moins de 55000 Ohm.cm$^2$. Le Tableau 1 indique les valeurs de résistance interne pour un accumulateur dont l'électrode positive contient seulement LFP comme matière électrochimiquement active et un accumulateur dont l'électrode positive comprend 90% en poids de LFP enrobé de carbone et 10% en poids de $Li(Ni_{0,8}Co_{0,15}Al_{0,05})O_2$.

Tableau 1

|  | Grammage (mg/cm$^2$) | Ah (accumul ateur) | Surface (cm$^2$) | Ah/cm$^2$ | Impedance (Ohm) 50% SOC 5sec 20 C | Impedance (Ohm) 50% SOC 5sec 20 C | ASI (Ohm.cm$^2$) 15 sec 30C | ASI (Ohm.cm$^2$) 5 sec 20C |
|---|---|---|---|---|---|---|---|---|
| LFP | 8 | 27 | 29172 | $9,3 \times 10^{-4}$ | 2,05 |  | 59709 |  |
| 90% LFP/ 10% NCA | 10 | 30 | 25454 | $1,2 \times 10^{-3}$ | 1,60 | 1,99 | 40741 | 50687 |

Malgré un grammage élevé de 10 mg/cm$^2$, l'accumulateur comprenant l'électrode selon l'invention présente une impédance plus faible. Il est donc possible de préparer des électrodes plus épaisses, moins poreuses et obtenir néanmoins une amélioration de la puissance à basse témpérature.

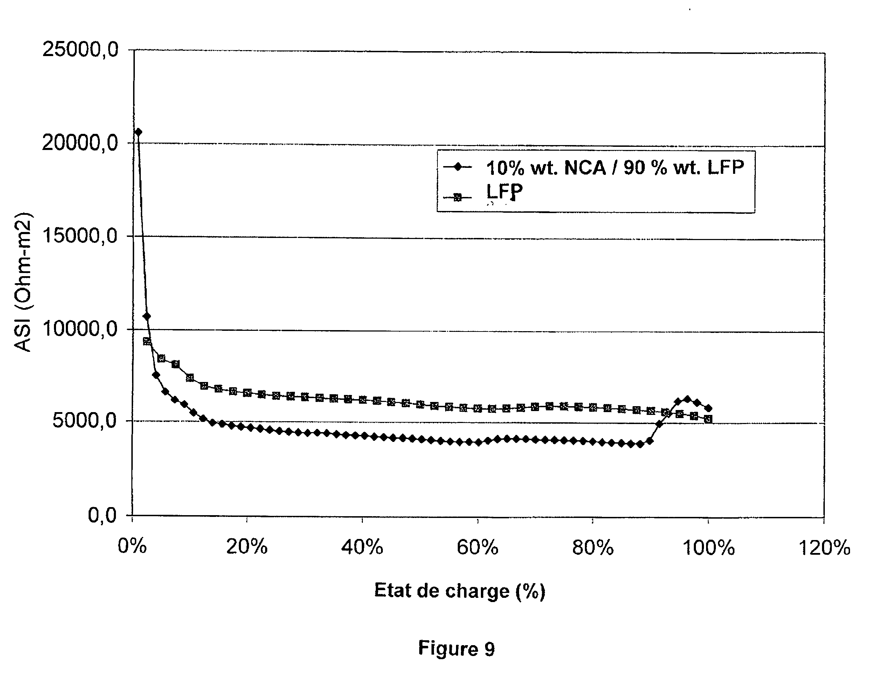

La figure 9 représente l'impédance de l'accumulateur en fonction de son état de charge pour :

- l'accumulateur dont l'électrode positive est selon l'invention ;
- l'accumulateur dont l'électrode positive comprend seulement LFP.

La figure 9 montre que, pour un état de charge compris entre environ 5% et environ 90%, l'accumulateur comprenant l'électrode positive selon l'invention présente une impédance plus faible que l'accumulateur dont l'électrode positive comprend seulement LFP.

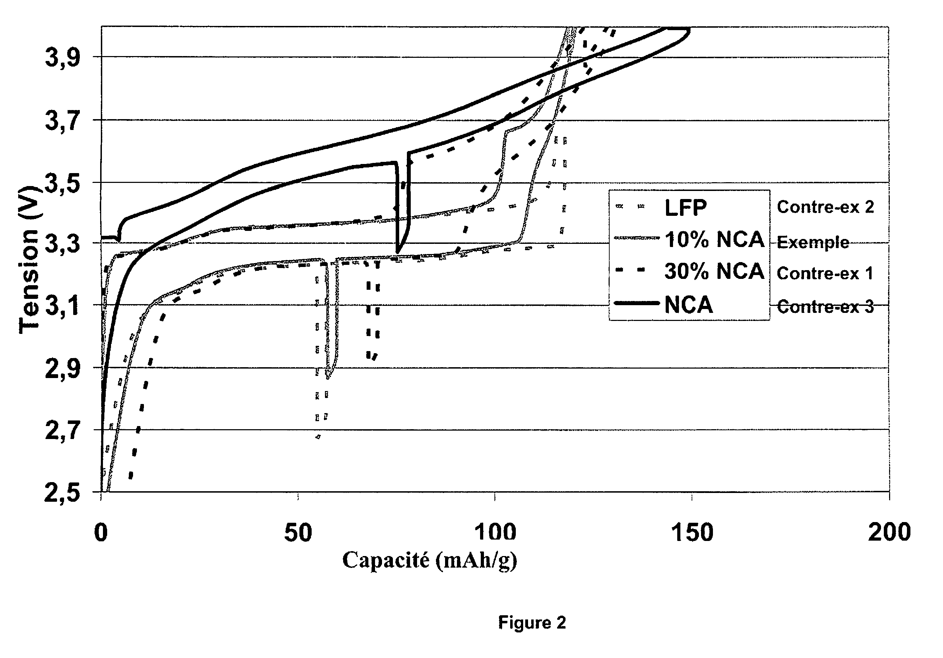

La matière active selon l'invention est intéressante du point de vue du contrôle de la charge. En effet, pour un matériau de type LMP, le mécanisme d'insertion et désinsertion du lithium induit un changement de phase du matériau qui est biphasé tout le long de la charge et de la décharge, ce qui fixe la tension en cyclage. De ce fait, la tension d'un matériau de type LMP ne dépend pas de son état de charge. Il est donc difficile de suivre l'état de charge d'un accumulateur dont la matière active positive contient LMP. La gestion de la charge d'une batterie d'accumulateurs est donc difficile. Or, un oxyde lithié de métal de transition voit sa tension évoluer en fonction de son taux de lithiation (mécanisme d'insertion et désinsertion du lithium en solution solide). La tension d'un oxyde lithié de métal de transition où le métal de transition est choisi parmi Co, Ni, Al, Mn ou un mélange de ceux-ci, dépend donc de son état de charge. Il a été découvert que l'addition de NCA au matériau LMP apportait un signal permettant de détecter la fin de la charge. La Figure 2 montre une augmentation plus rapide de la tension en fin de charge. Le signal de fin de charge est obtenu avec seulement 10% de NCA. Dans une batterie, ce signal de fin de charge permet d'équilibrer les accumulateurs entre eux afin d'optimiser la charge de la batterie et d'éviter la surcharge des accumulateurs. La sécurité d'utilisation de la batterie ou d'un module d'accumulateurs est donc accrue.

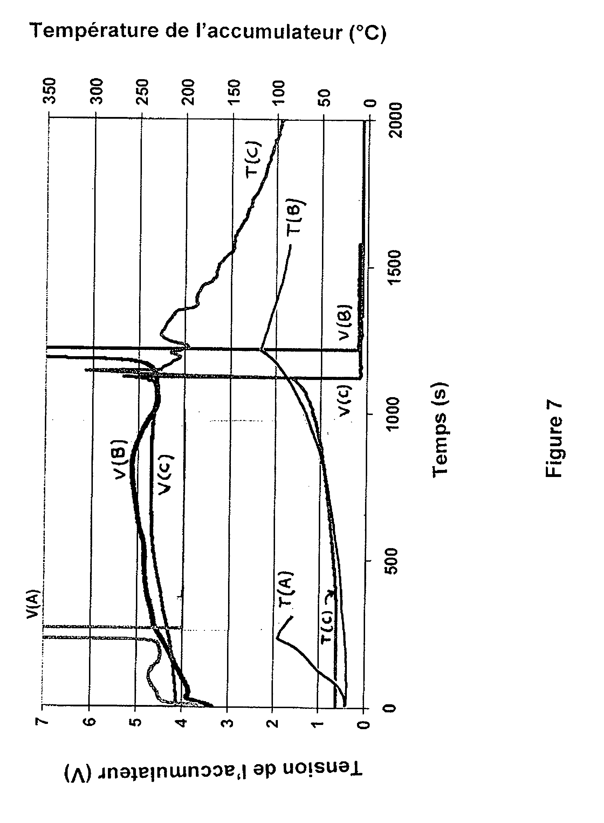

Il a été aussi été découvert qu'une électrode comprenant la composition selon l'invention est plus résistante à la surcharge qu'une électrode comprenant LFP ou NCA comme matière électrochimiquement active. La Figure 7 compare trois accumulateurs soumis à une surcharge. L'électrode positive de l'accumulateur A contient LFP. L'électrode positive de l'accumulateur B contient un mélange comprenant 90% en poids de LFP et 10% en poids de NCA. L'électrode positive de l'accumulateur C contient NCA. Les accumulateurs sont soumis à une surcharge à un courant égal par exemple à 2C. Un dispositif de sécurité interrompt la charge lorsqu'il détecte des conditions de fonctionnement ne garantissant pas la sécurité de l'utilisateur. Le dispositif de sécurité peut être un coupe-circuit, tel qu'un relais connecté entre le chargeur et l'accumulateur. Ce peut être aussi un amincissement pratiqué dans une des parois du conteneur de l'accumulateur. Cet amincissement est adapté à être déchiré par une surpression à l'intérieur du conteneur, la déchirure de l'amincissement permettant d'interrompre la conduction électrique entre les électrodes d'une polarité et la borne de sortie de courant correspondante. Un tel dispositif est décrit dans le document FR 2873495. La capacité chargée est mesurée jusqu'à ce que le dispositif de sécurité se déclenche. La figure 7 montre que la surcharge des accumulateurs A et C est interrompue après 4,3 min et 18,4 min de surcharge respectivement, tandis que la surcharge de l'accumulateur B selon l'invention est interrompue après 19,3 min. Ceci est surprenant car on s'attendrait à ce que l'interruption de la surcharge de l'accumulateur B se produise entre 4,3 min et 18,4 min. Ce résultat montre qu'un accumulateur dont l'électrode positive comprend la composition selon l'invention peut être soumis sans danger à une surcharge pendant une durée supérieure à celle obtenue pour un accumulateur dont l'électrode positive comprend une composition de matière active conventionnelle. L'accumulateur dont l'électrode positive contient la composition selon l'invention peut être chargé jusqu'à environ 150% de sa capacité nominale. Ceci ne correspond pas à un procédé de charge conventionnel. Il s'agit d'un test abusif de surcharge jusqu'à une limite de fonctionnement réversible.

L'accumulateur selon l'invention peut être de type lithium-ion ou lithium polymère. Il trouve des applications dans le domaine marin, le domaine des dispositifs portatifs, des véhicules électriques et hybrides, le domaine spatial, le domaine aéronautique, le domaine de la défense, des télécommunications et les équipements d'éclairage de secours.

EXEMPLES

Plusieurs compositions ont été réalisées :

-   Composition selon l'invention :

    $LiFePO_4$ enrobé de carbone/ $Li(Ni_{0,8}Co_{0,15}Al_{0,05})O_2$ = 90%/10% massique

-   Contre-exemple 1 : $LiFePO_4$ enrobé de carbone/$Li(Ni_{0,8}Co_{0,15}Al_{0,05})O_2$ = 70%/30%
-   Contre-exemple 2 : 100% $LiFePO_4$ enrobé de carbone
-   Contre-exemple 3 : 100% $Li(Ni_{0,8}Co_{0,15}Al_{0,05})O_2$

Le $LiFePO_4$ utilisé dans l'exemple selon l'invention et les contre-exemples 1 à 2 a été synthétisé et réduit en poudre. Les grains de LFP ont ensuite été enrobés par du carbone. Le LFP utilisé dans les exemples, à l'exception de l'exemple comparatif de la Figure 6, est toujours revêtu de carbone. L'électrode de l'exemple selon l'invention présente un grammage de 23 mg/cm$^2$/face.

<u>Amélioration de la stabilité thermique</u> - Mesures DSC Différents accumulateurs ont été montés, comprenant :

-   une électrode positive constituée de la matière active positive $Li(Ni_{0,8}Co_{0,15}Al_{0,05})O_2$, $LiFePO_4$ enrobé de carbone ou $Li(Ni_{0,8}Co_{0,2})O_2$
-   Un électrolyte constitué d'un sel de lithium et de solvants à base de carbonates d'alkyles
-   Un séparateur (par exemple en polyéthylène et/ou en polypropylène)
-   Une électrode négative constituée de Li métal.

Les mesures DSC ont été réalisées sur les électrodes positives non lavées après cyclage + charge (2-4,1V, C/20, température ambiante).

La présence d'aluminium dans le matériau $Li(Ni_{0,8}Co_{0,15}Al_{0,05})O_2$ améliore la stabilité par rapport au matériau $Li(Ni_{0,8}Co_{0,2})O_2$ (z=0) en retardant de 43°C le pic exothermique (Tableau 2).

<u>Tableau 2</u>: Stabilité thermique par DSC: comparaison de la température de pic des matériaux $Li(Ni_{0,8}Co_{0,15}Al_{0,05})O_2$ et $Li(Ni_{0,8}Co_{0,2})O_2$ (z=0).

| Composition de la matière active positive | Température de pic °C |
|---|---|
| $Li(Ni_{0,8}Co_{0,15}Al_{0,05})O_2$ | 241 |
| $Li(Ni_{0,8}Co_{0,20})O_2$ | 198 |

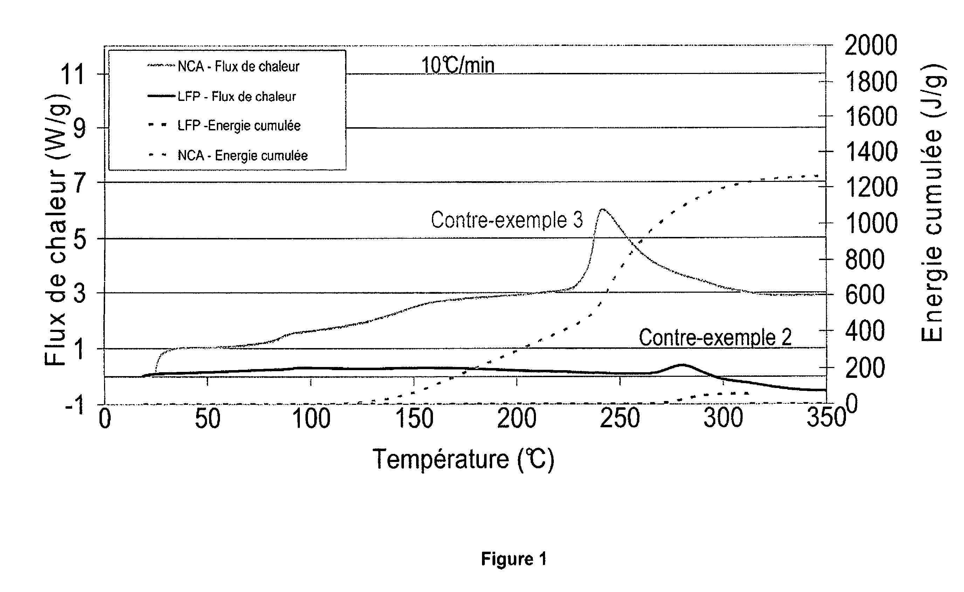

Le mélange de $LiFePO_4$ enrobé de carbone avec $Li(Ni_{0,8}Co_{0,15}Al_{0,05})O_2$ (matériau de type NCA) améliore largement la stabilité thermique de l'électrode positive par rapport au cas où $Li(Ni_{0,8}Co_{0,15}Al_{0,05})O_2$ est utilisé seul. L'énergie dégagée pour le contre-exemple 2 est beaucoup plus faible que pour le contre-exemple 3 et le pic exothermique est décalé vers des valeurs supérieures pour le contre-exemple 2 (Figure 1). Les valeurs d'énergie dégagée pour la composition de l'exemple selon l'invention et les contre-exemples 1 à 3 sont listées dans le Tableau 3. Pour la composition de l'exemple selon l'invention et le contre-exemple 1, ces valeurs ont été estimées en prenant compte du ratio $LiFePO_4$ enrobé de carbone/ $Li(Ni_{0,8}Co_{0,15}Al_{0,05})O_2$ et des valeurs expérimentales mesurées pour chacun des composés purs Contre-exemples 2 et 3.

<u>Tableau 3</u> : Energies dégagées mesurées (Contre-exemple 2 et 3 - Figure 1) ou estimées (Exemple selon l'invention et Contre-exemple 1).

| | Composition de la matière active positive | Energie cumulée (J/g) |
|---|---|---|
| Exemple | $LiFePO_4$ enrobé de carbone /$Li(Ni_{0,8}Co_{0,15}Al_{0,05})O_2$ = 90/10 | 178 (estimée) |

(suite)

| | Composition de la matière active positive | Energie cumulée (J/g) |
|---|---|---|
| Contre-exemple 1 | LiFePO$_4$ enrobé de carbone /Li(Ni$_{0,8}$Co$_{0,15}$Al$_{0,05}$)O$_2$ = 70/30 | 419 (estimée) |
| Contre-exemple 2 | 100% LiFePO$_4$ enrobé de carbone | 58 (mesurée) |
| Contre-exemple 3 | 100% Li(Ni$_{0,8}$Co$_{0,15}$Al$_{0,05}$)O$_2$ | 1260 (mesurée) |

En conséquence, le mélange Li (Ni$_{0,8}$Co$_{0,15}$Al$_{0,05}$)O$_2$+ LiFePO$_4$ enrobé de carbone avec au moins 90% de LiFePO$_4$ apporte une amélioration significative en termes de sécurité d'utilisation.

Mesure des valeurs de résistance interne :

Différents accumulateurs cylindriques ont été montés, comprenant :

- une électrode positive constituée de la matière active positive suivante :

  • LiFePO$_4$ enrobé de carbone / Li(Ni$_{0,8}$Co$_{0,15}$Al$_{0,05}$)O$_2$ = 90/10 (Exemple selon l'invention)
  • LiFePO$_4$ enrobé de carbone/ Li(Ni$_{0,8}$Co$_{0,15}$Al$_{0,05}$)O$_2$ = 70/30 (Contre-exemple 1)
  • 100% LiFePO$_4$ enrobé de carbone(Contre-exemple 2)
  • 100% Li(Ni$_{0,8}$Co$_{0,15}$Al$_{0,05}$)O$_2$ (Contre-exemple 3)

- Un électrolyte constitué d'un sel de lithium et de solvants à base de carbonates d'alkyles
- Un séparateur (par exemple en polyéthylène et/ou en polypropylène)
- Une électrode négative constituée de graphite.

Des cycles de contrôle avec pic de décharge de courant bref (pulse) ont été réalisés selon la procédure suivante :

- charge à C/5 jusqu'à 3,65V (Contre-exemple 2) ou 4,0V (exemple selon l'invention, contre-exemples 1 et 3)
- décharge à C/5 jusqu'à 2,5V avec un pic de décharge de courant bref de 5C pendant 10s à 50% de profondeur de décharge.

Les cycles de charge à C/5 et décharge à C/5 avec pic de décharge de courant bref (pulse) sont représentés sur la Figure 2.

Les valeurs de résistance interne Ri ont été calculées par la formule suivante :

$$\mathrm{Ri=[U(C/5)-U(5C,10s)]/[I(5C)-I(C/5)]}$$

où
U(C/5) représente la valeur de tension de l'accumulateur lors de la décharge à C/5 juste avant le pulse à 5C,
U(5C,10s) représente la valeur de tension de l'accumulateur lors du pulse à 5C à 10s,
I(5C) et I(C/5) représentent les valeurs de courant respectivement aux régimes de C/5 et 5C.

Ces valeurs sont ensuite normalisées en multipliant par la surface de l'électrode positive de l'accumulateur et les résultats exprimés en ohm.cm$^2$ sont rapportés dans le Tableau 4.

Tableau 4: Comparaison des valeurs initiales de résistance interne normalisées (en ohm.cm$^2$) d e s accumulateurs cylindriques de l'exemple selon l'invention et des contre-exemples 1, 2 et 3

| | Composition de la matière active positive | Ri (Ohm.cm$^2$) |
|---|---|---|
| Exemple selon l'invention | LiFePO$_4$ enrobé de carbone /Li(Ni$_{0,8}$Co$_{0,15}$Al$_{0,05}$)O$_2$ = 90/10 | 29 |
| Contre-exemple 1 | LiFePO$_4$ enrobé de carbone /Li(Ni$_{0,8}$Co$_{0,15}$Al$_{0,05}$)O$_2$ = 70/30 | 26 |

(suite)

| | Composition de la matière active positive | Ri (Ohm.cm$^2$) |
|---|---|---|
| Contre-exemple 2 | 100% LiFePO$_4$ enrobé de carbone | 44 |
| Contre-exemple 3 | 100% Li(Ni$_{0,8}$Co$_{0,15}$Al$_{0,05}$)O$_2$ | 17 |

Il apparaît clairement que 100% Li(Ni$_{0,8}$Co$_{0,15}$Al$_{0,05}$)O$_2$ (Contre-exemple 3) présente la valeur de résistance interne la plus faible et 100% LiFePO$_4$ enrobé de carbone (Contre-exemple 2) présente la valeur de résistance interne la plus élevée. Les mélanges LiFePO$_4$ enrobé de carbone /Li(Ni$_{0,8}$Co$_{0,15}$Al$_{0,05}$)O$_2$ = 70/30 (Contre-exemple 1) et LiFePO$_4$ enrobé de carbone /Li(Ni$_{0,8}$Co$_{0,15}$Al$_{0,05}$)O$_2$ = 90/10 (Exemple selon l'invention) présentent des valeurs de résistances internes plus proches de celle de 100% Li(Ni$_{0,8}$Co$_{0,15}$Al$_{0,05}$)O$_2$ que de celle de 100% LiFePO$_4$, bien que la quantité de Li(Ni$_{0,8}$Co$_{0,15}$Al$_{0,05}$)O$_2$ dans ces mélanges soit minoritaire. De plus, les compositions de l'exemple selon l'invention et du contre-exemple 1 présentent des valeurs de résistance interne très proches. De ce fait, le mélange LiFePO$_4$ enrobé de carbone /Li(Ni$_{0,8}$Co$_{0,15}$Al$_{0,05}$)O$_2$ = 90/10 (Exemple selon l'invention) apporte une meilleure stabilité thermique que le mélange LiFePO$_4$ enrobé de carbone/Li(Ni$_{0,8}$Co$_{0,8}$Al$_{0,05}$)O$_2$ = 70/30 (Contre-exemple 1) tout en diminuant presque autant la résistance interne de l'accumulateur.

<u>Stabilité des valeurs de résistance interne et de capacité électrochimique au cours du cyclage</u>

Les accumulateurs cylindriques ont ensuite été cyclés au régime de C/2 à 45°C. Tous les 15 jours, deux cycles de contrôle ont été effectués à 25°C.

-   premier cycle : charge à C/5 jusqu'à 3,65V, décharge à C/5 jusqu'à 2,5V avec un pic de décharge de 5C pendant 10s à 50% de la décharge ;
-   deuxième cycle : charge à C/5 jusqu'à 4,0V, décharge à C/5 jusqu'à 2,5V avec un pic de décharge de 5C pendant 10s à 50% de la décharge

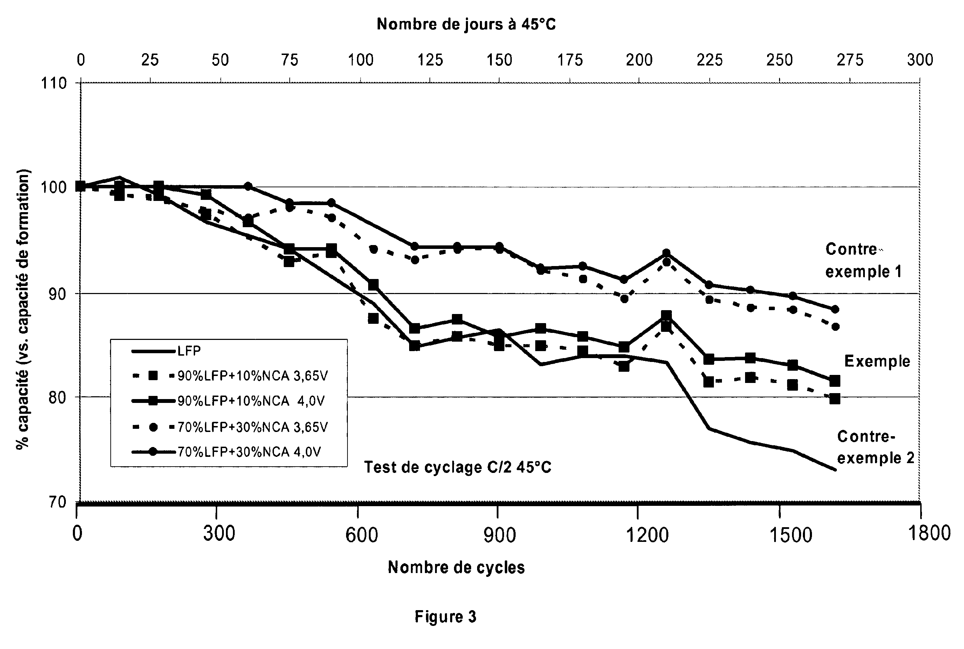

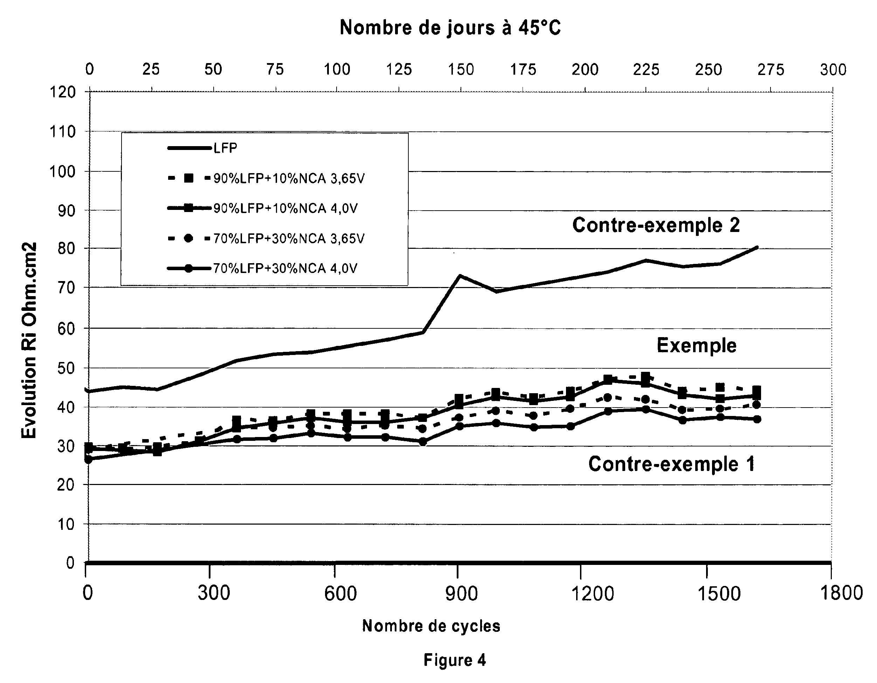

L'évolution de la capacité déchargée mesurée pendant les cycles de contrôle est représentée sur la Figure 3. L'évolution des résistances internes exprimées en ohm.cm$^2$ est représentée sur la Figure 4.
On voit clairement sur la Figure 3 que la perte de capacité diminue avec l'accroissement du pourcentage de Li(Ni$_{0,8}$Co$_{0,15}$Al$_{0,05}$)O$_2$ dans le mélange.
La figure 4 montre clairement que l'ajout de Li(Ni$_{0,8}$Co$_{0,15}$Al$_{0,05}$)O$_2$ dans le mélange diminue de moitié l'augmentation de résistance interne au cours du cyclage (+40% vs +90%). Cette stabilisation est la même quel que soit le taux de Li(Ni$_{0,8}$Co$_{0,15}$Al$_{0,05}$)O$_2$ dans le mélange. En revanche, le mélange LiFePO$_4$ enrobé de carbone /Li(Ni$_{0,8}$Co$_{0,15}$Al$_{0,05}$)O$_2$ = 90/10 (Exemple) est thermiquement plus stable que le mélange LiFePO$_4$ enrobé de carbone /Li(Ni$_{0,8}$Co$_{0,15}$Al$_{0,05}$)O$_2$ = 70/30 (Contre-exemple 1).
Pour se rendre compte des différents avantages offerts par la composition dans l'exemple selon l'invention, par rapport aux autres mélanges testés (Contre-exemples), les résultats obtenus sur les 4 mélanges (stabilité thermique, résistance interne initiale, stabilité en cyclage en termes de capacité et de résistance interne) sont répertoriés dans le Tableau 5. Il est ainsi mis en évidence que l'Exemple selon l'invention offre le meilleur compromis entre ces différentes propriétés. En effet, si l'on classe par les symboles ++, +, - et - - selon que la propriété est très bonne, bonne, mauvaise ou très mauvaise, l'exemple selon l'invention est le seul matériau positif à ne présenter que des signes + ou ++. Ainsi, les contre-exemples 1 et 3 ont des signes - et -- sur la stabilité thermique, tandis que le contre-exemple 2 a des signes -- sur la résistance interne initiale, la stabilité de la résistance interne en cyclage et la rétention de capacité électrochimique en cyclage.

Tableau 5: Récapitulatif des différentes propriétés (stabilité thermique, résistance interne initiale, stabilité en cyclage) des différents exemples de matière active testés.

| | Composition de matière active positive | Stabilité thermique | Ri initiale | Stabilité Ri cyclage | Rétention de la capacité en cyclage |
|---|---|---|---|---|---|
| Exemple | LiFePO$_4$ enrobé de carbone/ Li(Ni$_{0,8}$Co$_{0,15}$Al$_{0,05}$)O$_2$ = 90/10 | + | + | ++ | + |

(suite)

| | Composition de matière active positive | Stabilité thermique | Ri initiale | Stabilité Ri cyclage | Rétention de la capacité en cyclage |
|---|---|---|---|---|---|
| Contre-exemple 1 | LiFePO$_4$ enrobé de carbone / Li (Ni$_{0,8}$Co$_{0,15}$Al$_{0,05}$)O$_2$ = 70/30 | - | + | ++ | ++ |
| Contre-exemple 2 | 100% LiFePO$_4$ enrobé de carbone | ++ | -- | -- | -- |
| Contre-exemple 3 | 100% Li (Ni$_{0,8}$Co$_{0,15}$Al$_{0,05}$)O$_2$ | -- | ++ | ++ | ++ |

Quatre compositions d'électrode ont été testées. Elles sont indiquées au Tableau 6 ci-dessous :

- Le contre-exemple 4 est un mélange de LFP non enrobé de carbone avec NC. Le terme « NC » se réfère à un oxyde lithié comprenant du nickel et du cobalt et ne comprenant pas d'aluminium ; le composé Li(Ni$_{0,8}$Co$_{0,2}$)O$_2$ est utilisé dans les contre-exemples 4 et 5 ;
- Le contre-exemple 5 est un mélange de LFP enrobé de carbone avec NC ;
- L'exemple selon l'invention est un mélange de LFP enrobé de carbone avec NCA.

Tableau 6

| | LFP non enrobé | LFP enrobé de carbone |
|---|---|---|
| NC | Contre-exemple 4 | Contre-exemple 5 |
| NCA | Contre-exemple 6 | Exemple selon l'invention |

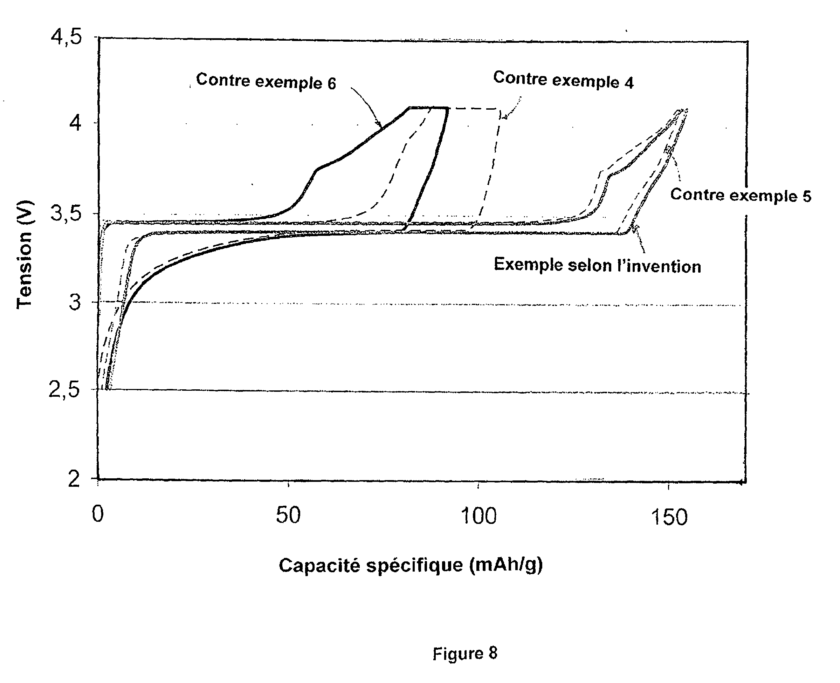

Quatre accumulateurs de format bouton ont été fabriqués. Chaque accumulateur contient une électrode positive comprenant une des compositions indiquées au Tableau 6 et une électrode négative au lithium métal. La Figure 8 représente les courbes de charge et de décharge pour chacun de des quatre exemples. Les accumulateurs ont été déchargés à 60°C à un courant de C/20, C étant la capacité déchargée mesurée lorsque l'accumulateur est déchargé en une heure. Les résultats de la figure 8 montrent que le carbone sous forme d'enrobage autour des particules de LFP permet d'obtenir une capacité plus élevée.

Afin de déterminer la résistance interne (Ri) des accumulateurs comprenant les compositions indiquées dans le Tableau 6, des tests de décharge ont été effectués à température ambiante à un courant de décharge de 1C durant 18s et à une profondeur de décharge de 50%. Les résultats sont indiqués au Tableau 7.

Tableau 7 : Valeurs de résistance interne normalisée (ohm.cm$^2$) obtenues à partir de pics de décharge de 18s à température ambiante pour une profondeur de décharge de 50% - Les mesures ont été réalisées sur deux accumulateurs.

| | LFP non enrobé | LFP enrobé de carbone |
|---|---|---|
| NC | Echec du test | 86/98* |
| NCA | 873 | 64/65* |

Pour la composition du contre-exemple 4 (sans enrobage de carbone ni aluminium), aucune valeur de résistance interne n'a pus être déterminée car la tension de coupure a été atteinte. Une amélioration significative de la résistance interne est observée lorsque les particules de LFP sont enrobées de carbone. En effet, la comparaison entre le contre-exemple de l'exemple 6 et l'exemple selon l'invention montre que la résistance interne est divisée par 10. La comparaison entre le contre-exemple de l'exemple 5 et l'exemple selon l'invention montre que la présence d'aluminium permet de diminuer la résistance interne. En conclusion, l'électrode comprenant la composition selon l'invention présente une résistance interne plus faible indiquant l'effet de synergie entre le revêtement de carbone autour des particules de LFP et la présence d'aluminium dans le composé NCA.

**Revendications**

1. Composition comprenant :

   a) un oxyde lithié de métaux de transition contenant au moins nickel, cobalt et aluminium ;
   b) un phosphate lithié d'au moins un métal de transition, dont la surface est recouverte au moins partiellement d'une couche de carbone,

      - la proportion massique de l'oxyde lithié de métaux de transition contenant au moins nickel, cobalt et aluminium, étant de 1 à 10% du poids de la composition ;
      - la proportion massique du phosphate lithié d'au moins un métal de transition étant de 90 à 99% du poids de la composition.

2. Composition selon la revendication 1, dans laquelle le phosphate lithié d'au moins un métal de transition a pour formule $Li_aM_bP_cO_{4-t}$ où
   M est choisi parmi Fe, Mn, Co et Ni, de préférence Fe;
   a, b et c vont de 0,9 à 1, 1 ;
   t est inférieur ou égal à 0,4.

3. Composition selon la revendication 2, dans laquelle le phosphate lithié d'au moins un métal de transition a pour formule $LiFePO_4$.

4. Composition selon l'une des revendications 1 à 3, dans laquelle l'oxyde lithié de métaux de transition contenant au moins nickel, cobalt et aluminium a pour formule $Li_w(Ni_xCo_yAl_z)O_2$, où
   w va de 0,9 à 1,1 ;
   x > 0 ;
   y > 0 ;
   z > 0.

5. Composition selon la revendication 4, dans laquelle :

   $0,70 \leq x \leq 0,9$ ;
   $0,05 \leq y \leq 0,25$ ;
   $z \leq 0,10$ et
   x+y+z=1.

6. Composition selon la revendication 5, dans laquelle
   $0,75 \leq x \leq 0,85$ ;
   $0,10 \leq y \leq 0,20$.

7. Composition selon la revendication 6, dans laquelle x=0,80 ; y= 0,15 et z=0,05.

8. Composition selon la revendication 7, dans laquelle :

   - la proportion massique du phosphate lithié d'au moins un métal de transition est de 95 à 99 % du poids de la composition,
   - la proportion massique de l'oxyde lithié de métaux de transition contenant au moins nickel, cobalt et aluminium est de 1 à 5% du poids de la composition.

9. Electrode comprenant la composition selon l'une des revendications précédentes.

10. Electrode selon la revendication 9 présentant un grammage supérieur à 8 mg/cm²/f, de préférence au moins 10 mg/cm²/f et de préférence encore au moins 20mg/cm²/f.

11. Electrode selon la revendication 9 ou 10 présentant une valeur ASI d'impédance normalisée, mesurée pour un courant de décharge de 30C pendant 15s, de moins de 55 000 Ohm.cm$^2$, de préférence de moins de 45 000 Ohm.cm$^2$, ou une valeur ASI d'impédance normalisée, mesurée pour un courant de décharge de 20C pendant 5s, de moins de 65 000 Ohm.cm$^2$, de préférence de moins de 55 000 Ohm.cm$^2$, pour un état de charge d'environ 50%.

**12.** Accumulateur comprenant :

- un électrolyte non aqueux,
- au moins une électrode négative, et
- au moins une électrode positive qui est selon l'une des revendications 9 à 11.

**13.** Accumulateur selon la revendication 12, de type lithium-ion ou lithium-polymère.

**14.** Procédé de charge d'un accumulateur selon la revendication 12, à un courant de charge d'au'moins 2C, dans lequel la capacité chargée représente au moins 150% de la capacité nominale pour une tension de coupure de 3,6V ou au moins 140% de la capacité nominale pour une tension de coupure de 4,1V.

**15.** Procédé de charge selon la revendication 14, dans lequel la capacité chargée représente au moins 155% de la capacité nominale pour une tension de coupure de 3,6V ou au moins 145% de la capacité nominale pour une tension de coupure de 4,1V.

**Patentansprüche**

**1.** Zusammensetzung, umfassend:

a) ein lithiumhaltiges Oxid von Übergangsmetallen, welches mindestens Nickel, Kobalt und Aluminium enthält;
b) ein lithiumhaltiges Phosphat mindestens eines Übergangsmetalls, dessen Oberfläche mindestens teilweise von einer Kohlenstoffschicht bedeckt ist,

- wobei der Massenanteil des lithiumhaltigen Oxids von Übergangsmetallen, welches mindestens Nickel, Kobalt und Aluminium enthält, 1 bis 10 % vom Gewicht der Zusammensetzung ausmacht;
- wobei der Massenanteil des lithiumhaltigen Phosphats mindestens eines Übergangsmetalls 90 bis 99 % vom Gewicht der Zusammensetzung ausmacht.

**2.** Zusammensetzung nach Anspruch 1, wobei das lithiumhaltige Phosphat mindestens eines Übergangsmetalls die Formel $Li_aM_bP_cO_{4-t}$ aufweist, wobei
M aus Fe, Mn, Co und Ni ausgewählt ist und vorzugsweise Fe darstellt;
a, b und c Werte von 0,9 bis 1,1 annehmen;
t höchstens 0,4 beträgt.

**3.** Zusammensetzung nach Anspruch 2, wobei das lithiumhaltige Phosphat mindestens eines Übergangsmetalls die Formel $LiFePO_4$ aufweist.

**4.** Zusammensetzung nach einem der Ansprüche 1 bis 3, wobei das lithiumhaltige Oxid von Übergangsmetallen, welches mindestens Nickel, Kobalt und Aluminium enthält, die Formel $Li_w(Ni_xCo_yAl_z)O_2$ aufweist, wobei W Werte von 0,9 bis 1,1 annimmt;
x > 0;
y > 0;
z > 0.

**5.** Zusammensetzung nach Anspruch 4, wobei:

$0,70 \leq x \leq 0,9$;
$0,05 \leq y \leq 0,25$;
$z \leq 0,10$ und
x+y+z=1.

**6.** Zusammensetzung nach Anspruch 5, wobei:

0,75 ≤ x ≤ 0,85;
0,10 ≤ y ≤ 0,20.

**7.** Zusammensetzung nach Anspruch 6, wobei:

x = 0,80; y = 0,15 und z = 0,05.

**8.** Zusammensetzung nach Anspruch 7, wobei:

- der Massenanteil des lithiumhaltigen Phosphats mindestens eines Übergangsmetalls 95 bis 99 % vom Gewicht der Zusammensetzung ausmacht,
- der Massenanteil des lithiumhaltigen Oxids von Übergangsmetallen, welches mindestens Nickel, Kobalt und Aluminium enthält, 1 bis 5 % vom Gewicht der Zusammensetzung ausmacht;

**9.** Elektrode, die Zusammensetzung nach einem der vorhergehenden Ansprüche umfassend.

**10.** Elektrode nach Anspruch 9, welche ein Flächengewicht von mehr als 8 mg/cm$^2$/f, vorzugsweise von mindestens 10 mg/cm$^2$/f und mit noch größerem Vorzug von mindestens 20 mg/cm$^2$/f aufweist.

**11.** Elektrode nach Anspruch 9 oder 10, welche einen normalisierten ASI-Impedanzwert aufweist, der weniger als 55.000 Ohm.cm$^2$, vorzugsweise weniger als 45.000 Ohm.cm$^2$ beträgt, wenn die Messung 15 s lang mit einem Entladungsstrom von 30 C erfolgt, oder einen normalisierten ASI-Impedanzwert aufweist, der weniger als 65.000 Ohm.cm$^2$, vorzugsweise weniger als 55.000 Ohm.cm$^2$ beträgt, wenn die Messung 5 s lang mit einem Entladungsstrom von 20 C erfolgt, wobei der Ladungszustand ungefähr 50 % beträgt.

**12.** Akkumulator, umfassend:

- einen nicht-wässrigen Elektrolyten,
- mindestens eine negative Elektrode, und
- mindestens eine positive Elektrode gemäß einem der Ansprüche 9 bis 11.

**13.** Akkumulator nach Anspruch 12, vom Typ Lithium-Ionen oder Lithium-Polymer.

**14.** Verfahren zum Laden eines Akkumulators nach Anspruch 12, mit einem Ladestrom von mindestens 2 C, wobei die geladene Kapazität bei einer Schaltspannung von 3,6 V mindestens 150 % der Nennkapazität entspricht oder bei einer Schaltspannung von 4,1 V mindestens 140 % der Nennkapazität entspricht.

**15.** Verfahren zum Laden eines Akkumulators nach Anspruch 14, wobei die geladene Kapazität bei einer Schaltspannung von 3,6 V mindestens 155 % der Nennkapazität entspricht oder bei einer Schaltspannung von 4,1 V mindestens 145 % der Nennkapazität entspricht.


**Claims**

**1.** A composition comprising:

a) a lithiated oxide of transition metals containing at least nickel, cobalt and aluminium;
b) a lithiated phosphate of at least one transition metal, the surface of which is at least partially covered by a layer of carbon,

- the proportion by mass of the lithiated oxide of transition metals containing at least nickel, cobalt and aluminium, being equal to 1 to 10% by weight of the weight of the composition;
- the proportion by mass of the lithiated phosphate of at least one transition metal being from 90% to 99% of the weight of the composition.

**2.** Composition according to claim 1, in which the lithiated phosphate of at least one transition metal has the formula $Li_aM_bP_cO_{4-t}$ where
M is chosen from Fe, Mn, Co and Ni, preferably Fe;

a, b and c range from 0.9 to 1.1;
t is less than or equal to 0.4.

3. Composition according to claim 2, in which the lithiated phosphate of at least one transition metal has the formula $LiFePO_4$.

4. Composition according to one of claims 1 to 3, in which the lithiated oxide of transition metals containing at least nickel, cobalt and aluminium has the formula $Li_w(Ni_xCo_yAl_z)O_2$, where
w ranges from 0.9 to 1.1;
$x > 0$;
$y > 0$;
$z > 0$.

5. Composition according to claim 4, in which:

   $0.70 \leq x \leq 0.9$;
   $0.05 \leq y \leq 0.25$;
   $z \leq 0.10$ and
   $x+y+z=1$.

6. Composition according to claim 5, in which
$0.75 \leq x \leq 0.85$;
$0.10 \leq y \leq 0.20$.

7. Composition according to claim 6, in which
$x=0.80$; $y=0.15$ and $z=0.05$.

8. Composition according to claim 7, in which:

   - the proportion by mass of the lithiated phosphate of at least one transition metal is from 95 to 99 % of the weight of the composition,
   - the proportion by mass of the lithiated oxide of transition metals containing at least nickel, cobalt and aluminium is from 1 to 5% of the weight of the composition.

9. Electrode comprising the composition according to one of the previous claims.

10. Electrode according to claim 9 having a loading higher than 8 mg/cm$^2$/f, preferably at least 10 mg/cm$^2$/f and more preferably at least 20 mg/cm$^2$/f.

11. Electrode according to claim 9 or 10 having a ASI value measured for a discharge current of 30C during 15 s of less 55000 Ohm.cm$^2$, preferably less than 45000 Ohm.cm$^2$, or a ASI value measured for a discharge current of 20C during 5 s of less than 65 000 Ohm.cm$^2$, preferably of less than 55000 Ohm.cm$^2$, for a state of charge of about 50%.

12. Accumulator comprising:

   - a non-aqueous electrolyte,
   - at least one negative electrode and
   - at least one positive electrode which is according to any of claims 9-11.

13. Accumulator according to claim 12, of lithium-ion or lithium-polymer type.

14. Process of charging the accumulator of any of claims 12 or 13 at a charging current of at least 2C wherein the charged capacity represents at least 150% of the nominal capacity for a cut-off voltage of 3.6 V or at least 140% of the nominal capacity for a cut-off voltage of 4.1 V.

15. Process according to claim 14, wherein the charged capacity represents at least 155% of the nominal capacity for a cut-off voltage of 3.6 V or at least 145% of the nominal capacity for a cut-off voltage of 4.1 V.

Figure 1

Figure 2

**Nombre de jours à 45°C**

Figure 3

EP 2 269 954 B1

Figure 4

EP 2 269 954 B1

**Figure 5**

Capacité (mAh/g)

Tension (V)

LiFePO4 sans enrobage de carbone
LiFePO4 enrobé avec du carbone

Figure 6

Température de l'accumulateur (°C)

Figure 7

Figure 8

EP 2 269 954 B1

Figure 9

**EP 2 269 954 B1**

## RÉFÉRENCES CITÉES DANS LA DESCRIPTION

**Documents brevets cités dans la description**

- EP 1548861 A
- US 20070057228 A
- US 20060216605 A
- US 20020195591 A
- FR 2873495